# EUROPEAN PATENT SPECIFICATION

(11) **EP 1 407 992 B1**
(45) Date of publication and mention of the grant of the patent: **21.03.2007**
(21) Application number: 02079207.3
(22) Date of filing: 10.10.2002
(51) Int. Cl.: B65G 61/00, B62B 3/00, B60P 7/06

(54) **Device for the controlled placing of products into a container**
Vorrichtung zum kontrollierten Einlegen von Erzeugnissen in einen Behälter
Dispositif de mise en place contrôlée de produits dans un récipient

(43) Date of publication of application: 14.04.2004
(73) Proprietor: MULTIFOIL B.V., 3525 BB Utrecht (NL)
(72) Inventor: Hooft, Johannes Wilhelmus Gerardus, 4124 AV Hagestein (NL)
(74) Representative: Jilderda, Anne Ayolt

(56) References cited:
- EP-A- 0 636 557
- EP-A- 1 035 018
- GB-A- 2 094 258
- US-A- 4 608 808
- US-A- 4 720 958
- US-A- 5 501 571
- US-A- 5 944 479
- US-B1- 6 257 825

## Description

The present invention relates to a device for the controlled placing of products in a container, comprising a transport path for a supply of products, a loading station close to an end of the transport path to receive the container, which loading station is provided with loading means for controlled placing in the container of products supplied by the transport path, the loading means are being adapted to place a supplied product in the holder via at least one linear displacement, and that preceding the loading means at least one manipulator is provided which is able to place a product in a controlled basic orientation, which basic orientation enables the loading means to place the product in a desired position in the holder via said linear movement.

Such a device is known from USP 6.257.825 and finds particular application in warehouses and distribution centres, wherein large numbers of articles sometimes have to be packed together in one holder before the products are transported. This transport may be internal, for instance from a warehouse to a manufacturing department, or external, wherein the goods are moved to an external destination by road or otherwise. Much of this packing work has heretofore taken place by hand. In order to save this manual work diverse mechanical solutions have already been proposed, most of which use a robot arm to pick up the products from the transport path and place them in the holder. This usually involves the packing of a flow, which may or may not be constant, of articles which are highly similar in size, shape and weight, and to which the loading means are adapted and adjusted. However, for distribution centres and warehouses from which a wide diversity of articles have to be shipped, it is not found possible to implement these existing systems effectively. Particularly in distribution centres which supply supermarkets, the diversity of the products for shipping is so great, varying from relatively large products with a relatively low weight to relatively small products with a relatively high weight and with widely varying shapes, that the existing systems applied for this purpose have heretofore been found to fail.

The present invention has for its object, among others, to provide a device of the type stated in the preamble which is suitable for both similar products and products which are widely varying in respect of dimensions, weight and shape.

In order to achieve the intended objective, according to the invention, a device of the type stated in the preamble is characterized in that identification means are provided to identify a product supplied in the transport path, and that the at least one manipulator and the loading means can be controlled on the basis of parameters derived from a determined product identity. The invention is herein based on the insight, among others, that the necessary manipulation of the products, instead of being performed wholly with the loading means, is preferably distributed over the loading means and one or more manipulators which precede these in the transport path and which each account for a part of the total manipulation. These partial manipulations can thereby remain relatively simple and the product need not be picked up from the transport path for this purpose, or hardly so. Because it is precisely known at all steps on the basis of the received product information what the product is, the manipulations performed thereon can be precisely adapted to the actual shape, size and weight of the product. When the product has to finally leave the transport path to be placed in the holder, owing to the basic orientation as starting position realized by then a relatively simple and therefore relatively robust linear movement for which the loading means are optimally adapted will suffice for this purpose. All in all, a particularly robust and reliable system is thus obtained which, also in the case of widely diverse articles, is able to place these in controlled manner at the correct position in the holder.

In order to enable stacking of the products in the holder in a number of layers, a particular embodiment of the device according to the invention is characterized in that the loading station comprises a seat adjustable at least in vertical direction for receiving the holder thereon. In this embodiment the holder is placed on the seat and the holder can thus be positioned in vertical direction at the desired height relative to the transport path. When a complete layer of products has been arranged in the holder, the holder can thus be placed at a lower position, optionally in stepwise manner, to thus allow a subsequent layer to be stacked on the previous one, until the holder is at least substantially full or all the products intended for the holder have been placed therein.

In order to prevent a product, particularly one placed at the front of the holder, from falling out of it during the stacking of products, a further embodiment of the device according to the invention has the feature that the seat is tiltable at least a little about a substantially horizontal axis, which axis extends substantially transversely of a direction of said linear displacement. In this embodiment the holder with products, as seen from the loading means, is tilted slightly to the rear so that products offloaded therein will be less likely to fall forward out of the holder. By providing the holder at the rear with an optionally closed upright wall, the stack of products can support there against and remain enclosed in the holder.

Various, optionally electronic sensors can be utilized per se for the identification means. However, a particular embodiment of the device according to the invention has the feature that the identification means comprise an electronic sensor which is able to record an identification code arranged on a product, and more particularly that the identification code comprises a bar code. Information recorded in electronic manner is particularly suitable for further processing by the loading and manipulating means which will handle the product on the basis thereof. A bar code has proved itself exceptionally useful in this respect and links up perfectly with existing electronic identification systems that are commercially available.

A preferred embodiment of the device according to the invention has the feature that the at least one manipulator is adapted to at least tilt a product and rotate it on a vertical axis as desired. The loading means finally carry the product into the holder via an optionally multiple translation movement. By adapting the manipulating means such that tilting on a horizontal axis as well as rotation on a vertical axis are possible therewith, the product can be placed in the holder in any desired orientation from any random starting position. The device according to the invention therefore does not make any requirements in respect of the supply of the products other than that they are supplied in the correct sequence. A particular embodiment of the device according to the invention has the feature in this respect that the manipulator comprises a stop surface which can be placed transversely of a transporting direction in a transport path in order to receive a product thereagainst. By making a supplied product run up against the stop surface in the transport path and by simultaneously acting on a top side thereof from the rear, the product will tilt about a horizontal axis under the influence of its own momentum in the direction of the transport path, without a considerable effort being required from the manipulator for this purpose. A tilting option for products is thus provided in a relatively simple manner which is however no less reliable for that.

In a further embodiment the device according to the invention is characterized in that the loading means comprise a platform which is at least substantially horizontally displaceable in at least a first direction for receiving the product thereon, which platform in a first position is at least substantially in line with the transport path so as to receive a supplied product thereon, and in a second position enters the holder to offload a product therein. In this embodiment the product is guided from the transport path onto the platform and, supported by the platform, carried into the holder. With a correct positioning of the product on the platform and of the platform relative to the holder, the product can thus be placed at any desired position in the holder. A further particular embodiment of the device according to the invention has for this purpose the feature that the platform and the holder are displaceable relative to each other in a second direction at least substantially transversely of the first direction. For products which have to be placed at the rear of the holder the platform will enter further into the holder than for products which must come to lie at the front. In both cases the supporting platform prevents products from falling from or out of the device.

For those situations where the manipulation of the product by the loading means together with the manipulator is found to be insufficient for an effective positioning of products, a further embodiment of the device according to the invention has the feature that at least one further manipulator is arranged, which is able to co-act with a product in order to carry it into a further orientation. These further manipulating means can optionally be controlled electronically, for instance on the basis of provided product information. The objective hereby at all times is the setting or fine adjustment of the basic orientation of the product such that the product is presented to the loading means in an optimal orientation and position, so that malfunction and failure at the loading means can be limited to a minimum.

In this latter respect a particular embodiment of the device according to the invention has the feature that the at least one further manipulator comprises aligning means which are adapted to align a product at least almost fixedly in the transport path, and more particularly that the aligning means comprise two pressure members placed on either side of the transport path which are able to act on the product substantially transversely of the transporting direction, and that the aligning means are coupled to the identification means and are able to adapt the action of the pressure members to product information generated by the identification means. Since it thus possible to ensure that the products reach the loading means at least practically in the middle of the transport path, these latter means can be optimally adapted to a central position of the product as starting position.

Products are placed per se as closely together as possible in the holder by the device in order to achieve the best possible degree of filling. Because the products will in many cases have mutually differing dimensions and shapes, it is however unavoidable that the holder will nevertheless remain unfilled to a greater or lesser extent at a front side. In order to avoid the possibility of products shifting and falling down from higher layers, particularly during transport of the holder, such a holder has the feature that at least one upright wall extends from the undercarriage and that said upright wall is provided on an inner side with at least one inflatable body which is able to take on an expanded form and to fill up an empty space in the holder at least for the greater part. The inflatable body can for instance be filled using a standard compressed air installation and adjusts its shape and size to the empty space remaining at the front of the holder after this latter has been filled with products using the device. The danger of products shifting and/or falling down can thus be effectively prevented. A further embodiment of the holder according to the invention is in this respect the feature that a cover extends substantially transversely of the at least one wall on a top side of the holder and that the cover is provided with an inflatable body able to take on an expanded form and fill at least the greater part of an empty space in the holder, so that the above described filling can also be achieved from a top side.

Another hazard during transport, particularly during road transport, is that due to bumps, ramps and other irregularities in the road surface, products fly out of a holder at the top and come to lie in another holder or loosely in the transport area. This danger is particularly likely if the holder is fully or almost fully filled, as is the objective with the device according to the invention. A transport area for accommodating one or more holders, at least during transport, therefore comprises a mobile undercarriage provided with a number of upright walls and a roof plate which mutually bound a loading space. In order to counter the danger of falling out as described above, such a transport area has the feature that a pattern of inflatable bodies extends from the roof plate and extends into the loading space, corresponding with the intended locations of the holders, which inflatable bodies are able to take on an expanded form and herein enter a holder in order to at least partially fill an empty space therein. Since the holders are thus covered on their top, the products therein are wholly confined during transport.

The invention will be further elucidated below with reference to an embodiment and an associated drawing. In the drawing:
- figure 1: shows a schematic view of an embodiment of the device according to the invention;
- figure 2: is a schematic representation of identification means applied in the device of figure 1;
- figure 3: shows a side view of tilting means used in the device of figure 1;
- figure 4: shows a top view of aligning means used in the device of figure 1;
- figure 5: shows a cross-section of a holder according to an embodiment of the invention for use in combination with the device of figure 1;
- figure 6: shows a side view of a loading station of the device of figure 1; and
- figure 7: shows a cross-section of an embodiment of a transport area.

The figures are purely schematic and not drawn to scale. Some dimensions in particular are highly exaggerated for the sake of clarity. Corresponding components are designated as far as possible in the figures with the same reference numeral.

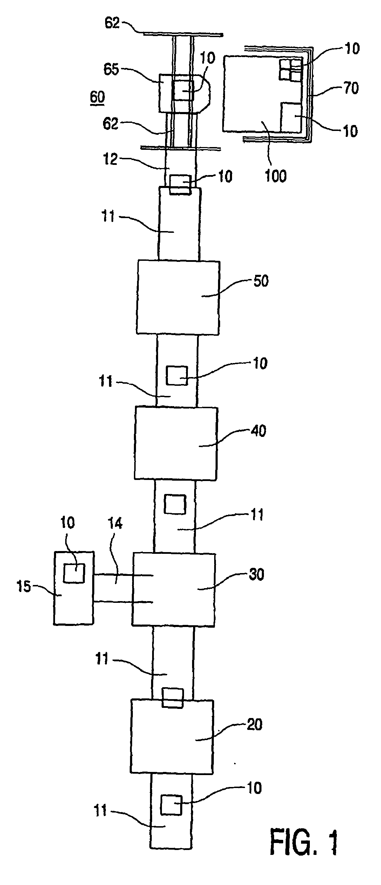

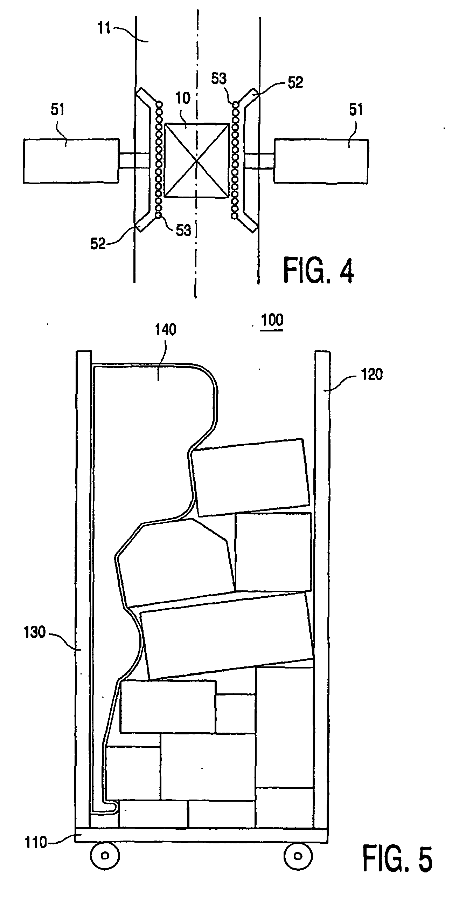

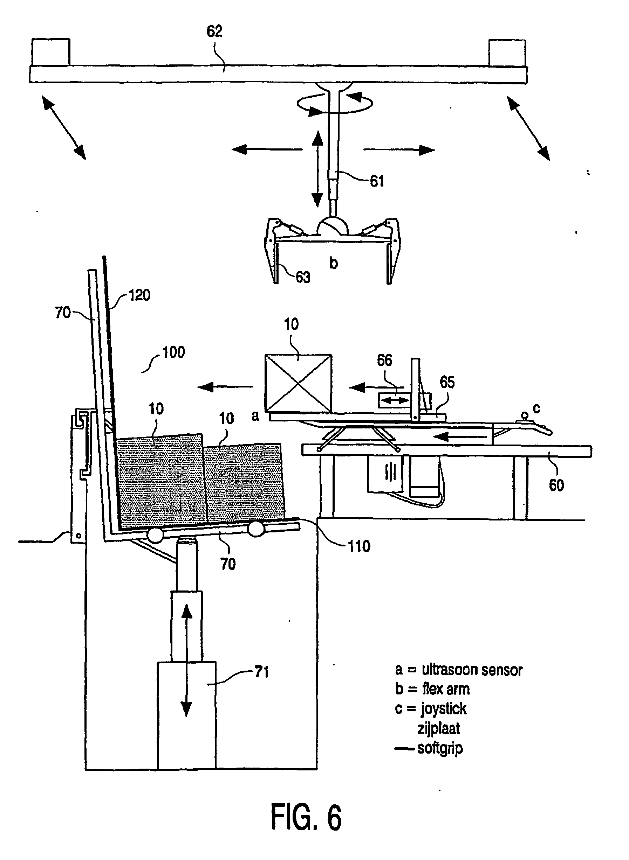

Figure 1 shows schematically an embodiment of a device for controlled placing of products in a holder according to the invention. Referred to in this case is a device as can be utilized in large warehouses and distribution centres, particularly for stocking retail chains and supermarkets. The device comprises a transport path in the form of one or more driven roller conveyors 11 and/or conveyor belts 12 over which products 10 are supplied. Products 10 have to be stacked in holders 100 applied standard for this purpose, so-called roller holders, which are provided with a mobile undercarriage 110 having removable racks 120,130 on either side, see figures 5 and 6. Such holders typically have a length and width of about 80 cm and are about 180 cm high and are filled in successive layers with the articles for transporting. In the case of the retail chain, and in particular the supermarket, these products vary from relatively small and heavy, such as for instance bulk packagings of soups, sauces and drinks, to relatively large and light, for instance tissue paper and savoury snacks. All modalities lying therebetween also occur and likewise have to be handled by the device.

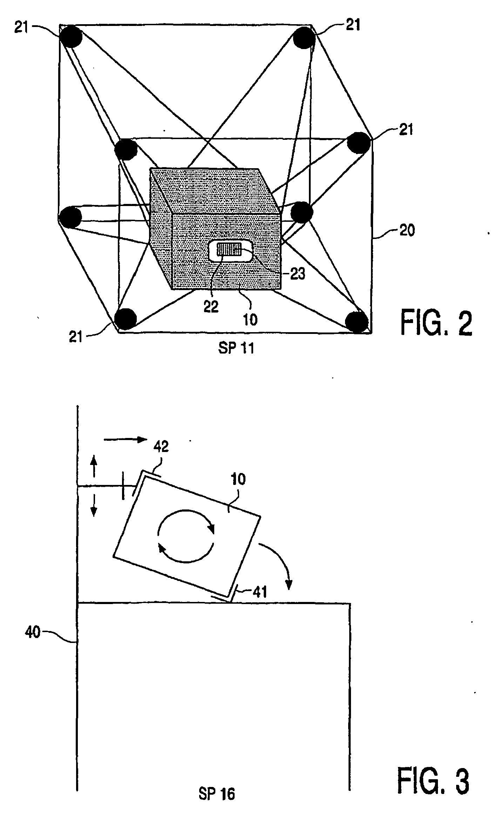

Because products are presented at defined locations in supermarkets and shops it is important to fill holder 100 in a manner adapted thereto, so that unpacking in the shop and shelf-filling can take place as efficiently as possible. This means that products of the same product category, which will eventually come to lie close together in the supermarket or shop, are arranged in the same or successive layers in the holder. With a view hereto, products 10 are supplied in the correct sequence and provided with one or more identification labels 22, see figure 2, in order to be recognized by identification means 20.

Identification means 20 comprise one or more electronic sensors 21, so-called bar code readers, with which identification labels 22 arranged on product 10 and having thereon an identification code 23 in the form of a pattern of successive bars can be recognized and read. In this case, see figure 2, the identification means comprise eight such sensors 21, so that an identification label 22 arranged on a product will at all times be read, provided it is visible at all. This latter can be ensured in relatively simple manner by for instance applying two such identification labels 22 on different sides of the product. The bar code arranged on the label provides a unique identification of the supplied product, on the basis of which all relevant data concerning the product in question can be retrieved from a central database via an information network (not further shown). This data includes, among other things, the dimensions and the weight of the product, which will be used for subsequent processing. In addition, the label record provides information relating to the actual orientation of the product.

If no identification is possible or it is established that the product is not the correct product, the product is ejected in transverse direction from transport path 10 in a subsequent ejection station 30 and discharged via a roller conveyor 14 to a parallel transport system 15 for further processing, manually or otherwise. The correct product is however allowed through and transported further to a first manipulating station 40 in the form of a tilting table, which is shown in more detail in figure 3. Tilting table 40 is coupled to identification means 20 and comprises a stop surface 41 which can be selectively placed in the transport path of the product. Stop surface 41 herein co-acts with a pusher 42 acting on an upper side of product 10 to tilt the product forward on a horizontal axis as it runs up against stop surface 41, assisted herein by the product's own momentum. This momentum is directly proportional to the mass of the product, so that the effort which has to be produced by tilting means 41,42 can also remain relatively small in the case of relatively heavy products, all the more so since the product does not have to be picked up from the transport path.

The tilting by tilting means 40 is carried out selectively in accordance with the recorded orientation of the product and the eventually desired orientation in holder 100. After the optional tilting of the product, it is transported further to a second manipulating station 50 comprising aligning means which are further shown in figure 4. The aligning means comprise two controllable actuators 51 which act on product 10 from the side to align it along a central axis of transport path 11. In this case the actuators comprise two hydraulic or pneumatic cylinders 51 which are driven on the basis of product information generated by identification means 20. The displacement of the piston rod of the pressure cylinders and the force with which the product is acted upon are thus geared precisely to the nature, the size and the weight of the product in question, so that optimal operation is achieved. Bearing-mounted rollers 53 on the side of the contact members 53 of the aligning means directed toward product 10 reduce the friction with the product and thus ensure undisturbed transit.

The product 10 placed centrally in the transport path is transported further to a loading station 60, which has a further manipulator 61 available in the form of a gripper with which the product can be picked up from the transport path and, if desired, can be rotated about a vertical central axis, as shown in further detail in figure 6. Gripper 61 runs in a rail system 62 and can be driven herein both in the direction of the transport path and in a direction transversely thereof, so that product 10 can be ideally positioned on a horizontally displaceable platform 65 of the loading means with which the product can be carried into holder 100. An inner side of the gripper is covered with a layer of friction material 63 in order to always have an effective grip on product 10.

The platform is driven by two actuators which can be driven independently of each other to enable a linear movement to be performed in a direction transversely of a connecting line with the holder as well as in the direction of this line. These actuators are driven on the basis of parameters derived from determined product data of the supplied product. In accordance with the invention this latter operation is kept as simple as possible and, with a view hereto, the product is placed on platform 65 in the most ideal orientation and position using gripper 61. Because the platform lies situated a little below the level of transport path 11,12, the product does not have to be lifted up for this purpose. The device is hereby not subject to a load resulting from a product's own weight, or hardly so, and is therefore suitable for handling products of widely varying mass and density. Because the product is not lifted up during the whole cycle, right up to and including the final position in the holder, it cannot fall either, and the danger of breakage or malfunction as a result of products falling out is zero.

For the sake of certainty a human inspection can be deployed at this processing step to supervise the various operations.

After having first been aligned in width direction using platform 65, a single linear movement will now suffice to carry the product on the platform to the desired depth in the holder. Both the width alignment and this forward motion are centrally controlled on the basis of the recorded product data and the final position of the product in holder 100 predetermined on the basis thereof. The platform is provided with discharging means in the form of a linear actuator 66 to push the product therefrom into the desired final position and to cause it to land in the holder. An optimum filling of the holder can thus be precalculated and realized in fully automatic manner using the device. If desired, the platform can be equipped on a front side with one or more pressure-sensitive, ultrasonic or optical sensors so as to ensure that the platform does not enter the holder any further than a free space therein allows. As soon as the platform runs up unexpectedly against a previously loaded product or a rear wall of the holder, the sensor will generate a signal on the basis of which the actuator of the platform is for instance switched off in order to avoid breakage or malfunction.

During the process the holder 100 is situated on a loading seat 70 which is height-adjustable by means of a hydraulic cylinder 71 provided for this purpose. By causing the loading seat 70 with holder 100 thereon to descend in stepwise manner during the process, holder 100 can be filled with products in layers without a further adjustment of loading means 60-65 being required for this purpose. In order to prevent the products, once they have been placed in holder 100, from falling out of the holder, particularly from the front row, the loading seat 70 furthermore provides a slight tilting on a horizontal axis, as indicated in the figure, so that the loaded products lean back somewhat and support against a rear wall of holder 100 and seat 70. After the seat is thus completely filled, it can optionally be removed in rolling manner at a level lying below the device in order to make room for a subsequent holder. These operations can, if desired, also be carried out in fully automatic manner.

Although an exceptionally economical filling of the holder can thus be achieved, it will often not be possible in practice to avoid a certain unfilled residual space still being left over, particularly at the front side, as a result of a certain incompatibility between the dimensions of the products and those of the holder. This may be the case particularly in the case of an optimum filling as achieved by the device according to the invention. In order to avoid products becoming mixed up as a result, holder 100 is provided, after being filled, with a special front partition 130 having on an inner side thereof an inflatable body 140 which is filled with compressed air in order to fill, wholly or at least for the greater part, the empty space, see figure 5. Products 10 are thus packed closely together and are no longer able to fall. If desired, this can also be realized on the top side of holder 100 by placing a cover there which in similar manner is provided on an inner side with an inflatable body which is expanded to fill the greater part of the empty space.

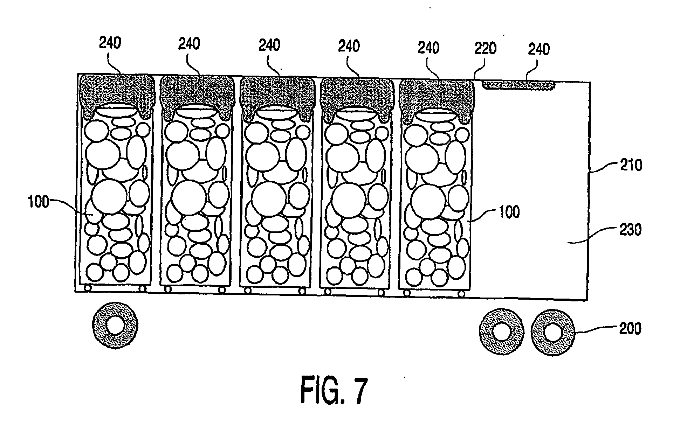

The thus optimally filled holders 100 are placed together in a transport area. The transport area is for instance a semi-trailer of a truck or a carriage of a train and comprises, see figure 7, a mobile undercarriage 200 provided with a number of upright walls 210 and a roof plate 220 which enclose a loading space 230. There is arranged on roof plate 220 a pattern of inflatable bodies 240 which extend into the loading space, The position of these bodies 240 corresponds with the intended position of holders 100 in loading space 230 and the dimensions of the bodies are also adjusted to holders 100 so that, in the expanded state as shown, the bodies 240 enter the holders from the top in order to at least partially fill and cover them. It is thus possible to avoid products 10 moving during transport from one holder into another or into the loading space.

Although the invention has been further elucidated in the foregoing with reference to only a single embodiment, it will be apparent that the invention is in no way limited to the given embodiment. On the contrary, many other embodiments and variations are still possible for a person with ordinary skill in the art within the scope of the invention as defined in the appended claims. The shown manipulators and loading means are thus given by way of example for a further understanding of the invention, but other manipulators and loading means can also be applied for this purpose. The above stated sensor on the front side of the loading platform can also be coupled to the seat for the holder such that the level of the holder is continuously adjusted and adapted to the free space as actually detected by the sensor. At least some of the parameters for the loading means can thus be determined experimentally instead of being preset.

In the embodiment the loading means and manipulators were controlled on the basis of a product identity determined and generated by the identification means.

The invention provides a device with which products which are widely diverse in weight and size are placed in controlled manner in a holder in a reliable and efficient way, in order to thus achieve an optimum degree of filling using limited manpower.

## Claims

1. Device for the controlled placing of products (10) in a holder (100), comprising a transport path (11,12) for a supply of products (10), a loading station (60-70) close to an end of the transport path (11,12) to receive the holder (100), which loading station (60-70) is provided with loading means (65) for controlled placing in the holder (100) of products (10) supplied by the transport path (11,12), the loading means (65) are being adapted to place a supplied product (10) in the holder (100) via at least one linear displacement, and that preceding the loading means (65) at least one manipulator (40,50,61) is provided which is able to place a product (10) in a controlled basic orientation, which basic orientation enables the loading means (65) to place the product (10) in a desired position in the holder (100) via said linear movement **characterized in that** identification means (20) are provided to identify a product (10) supplied in the transport path (11,12), and that the at least one manipulator (40,50,61) and the loading means (65) can be controlled on the basis of parameters derived from a determined product identity.

2. Device as claimed in claim 1, **characterized in that** the identification means (20) comprise an electronic sensor (21) which is able to record an identification code arranged on a product.

3. Device as claimed in claim 2, **characterized in that** the identification code comprises a bar code.

4. Device as claimed in any of the foregoing claims, **characterized in that** the loading station (60-70) comprises a loading seat (70) adjustable at least in vertical direction for receiving the holder (100) thereon.

5. Device as claimed in claim 4, **characterized in that** the loading seat (70) is tiltable at least a little about a substantially horizontal axis, which axis extends substantially transversely of a direction of said linear displacement.

6. Device as claimed in one or more of the foregoing claims, **characterized in that** the at least one manipulator (40) is adapted to at least tilt a product and rotate it on a vertical axis as desired.

7. Device as claimed in claim 6, **characterized in that** the manipulator (40) comprises a stop surface (41) which can be placed in the transport path (11,12) transversely of a transporting direction in order to receive a product (10) thereagainst.

8. Device as claimed in one or more of the foregoing claims, **characterized in that** the loading means comprise a platform (65) which is at least substantially horizontally displaceable in at least a first direction for receiving the product (10) thereon, which platform (65) in a first position is at least substantially in line with the transport path (11,12) so as to receive a supplied product (10) thereon, and in a second position enters the holder (100) to offload a product (10) therein.

9. Device as claimed in claim 8, **characterized in that** the platform and the holder are displaceable relative to each other in a second direction at least substantially transversely of the first direction.

10. Device as claimed in one or more of the foregoing claims, **characterized in that** at least one further manipulator (40,50,61) is arranged which is able to co-act with a product (10) in order to carry it into a further orientation.

11. Device as claimed in claim 10, **characterized in that** the at least one further manipulator (50) comprises aligning means (51,52,53) which are adapted to align a product (10) at least almost fixedly in the transport path (11,12).

12. Device as claimed in claim 11, **characterized in that** the aligning means (51, 52,53) comprise two pressure members (52) placed on either side of the transport path (11,12) which are able to act on the product (10) substantially transversely of the transporting direction, and that the aligning means (51,52,53) are coupled to the identification means (20) and are able to adapt the action of the pressure members (52) to product information generated by the identification means (20).

## Patentansprüche

1. Vorrichtung zum kontrollierten Ablegen von Produkten (10) in einen Behälter (100), mit: einem Transportweg (11, 12) für ein Zuführen von Produkten (10); einer Beladestation (60-70), die nahe zu einem Ende des Transportwegs (11, 12) angeordnet ist, um den Behälter (100) aufzunehmen, wobei die Beladestation (60-70) mit Belademitteln (65) zum kontrollierten Ablegen von Produkten (10) in den Behältern (100), die von dem Transportweg (11, 12) zugeführt werden, versehen ist; wobei die Belademittel (65) ange-passt sind, ein zugeführtes Produkt (10) durch zumindest eine lineare Bewegung in den Behälter (100) abzulegen, und wobei den Belademitteln (65) vorhergehend zumindest ein Manipulator (40, 50, 61) vorgesehen ist, der ein Produkt (10) in einer kontrollierten Basisorientierung ablegen kann, wobei die Basisorientierung es den Belademitteln (65) ermöglicht, das Produkt (10) in dem Behälter (100) über die lineare Bewegung in eine gewünschte Lage zu bringen, **dadurch gekennzeichnet, dass** Identifizierungsmittel (20) vorgesehen sind, um ein Produkt (10) zu identifizieren, welches über den Transportweg (11, 12) zugeführt wird, und dass der zumindest eine Manipulator (40, 50, 61) und die Belademittel (65) auf der Basis von Parametern gesteuert werden können, die von einer bestimmten Produktidentität abgeleitet werden.

2. Vorrichtung nach Anspruch 1, **dadurch gekennzeichnet, dass** die Identifizierungsmittel (20) einen elektronischen Sensor (21) aufweisen, der einen Identifizierungscode einlesen kann, der auf einem Produkt angeordnet ist.

3. Vorrichtung nach Anspruch 2, **dadurch gekennzeichnet, dass** der Identifizierungscode ein Strichcode ist.

4. Vorrichtung nach einem der vorhergehenden Ansprüche, **dadurch gekennzeichnet, dass** die Beladestation (60-70) einen Beladesitz (70) aufweist, der zumindest in vertikaler Richtung zum Aufnehmen des Behälters (100) darauf einstellbar ist.

5. Vorrichtung nach Anspruch 4, **dadurch gekennzeichnet, dass** der Beladesitz (70) zumindest ein wenig um eine im Wesentlichen horizontale Achse neigbar ist, wobei sich die Achse im Wesentlichen quer zu einer Richtung der linearen Bewegung erstreckt.

6. Vorrichtung nach einem oder mehreren der vorhergehenden Ansprüche, **dadurch gekennzeichnet, dass** der zumindest eine Manipulator (40) angepasst ist, um zumindest ein Produkt zu neigen und es um eine gewünschte vertikale Achse zu drehen.

7. Vorrichtung nach Anspruch 6, **dadurch gekennzeichnet, dass** der Manipulator (40) eine Anschlagsoberfläche (41) aufweist, die in den Transportweg (11, 12) gebracht werden kann, der quer zu einer Transportrichtung angeordnet ist, um ein Produkt (10) dagegen zu empfangen.

8. Vorrichtung nach einem oder mehreren der vorhergehenden Ansprüche, **dadurch gekennzeichnet, dass** die Belademittel eine Plattform (65) aufweisen, die im Wesentlichen horizontal in zumindest einer ersten Richtung zum Aufnehmen des Produkts (10) darauf beweglich ist, wobei die Plattform (65) in einer ersten Stellung im Wesentlichen mit dem Transportweg (11, 12) derart ausgerichtet ist, dass ein darüber zugeführtes Produkt (10) aufgenommen wird, und in einer zweiten Position in den Behälter (100) eindringt, um ein Produkt darin abzuladen.

9. Vorrichtung nach Anspruch 8, **dadurch gekennzeichnet, dass** die Plattform und der Behälter relativ zueinander in einer zweiten Richtung zumindest im Wesentlichen quer zu der ersten Richtung beweglich sind.

10. Vorrichtung nach einem oder mehreren der vorhergehenden Ansprüche, **dadurch gekennzeichnet, dass** zumindest ein weiterer Manipulator (40, 50, 61) angeordnet ist, der mit einem Produkt (10) zusammenwirken kann, um es in eine weitere Lage zu tragen.

11. Vorrichtung nach Anspruch 10, **dadurch gekennzeichnet, dass** der zumindest eine weitere Manipulator (50) Ausrichtungsmittel (51, 52, 53) aufweist, die angepasst sind, um ein Produkt (10) zumindest nahezu fest im Transportweg (11, 12) angeordnet auszurichten.

12. Vorrichtung nach Anspruch 11, **dadurch gekennzeichnet, dass** die Ausrichtungsmittel (51, 52, 53) zwei Pressglieder (52) aufweisen, die auf jeder Seite des Transportwegs (11, 12) angeordnet sind und auf das Produkt (10) im Wesentlichen quer zu der Transportrichtung wirken können, und dass die Ausrichtungsmittel (51, 52, 53) an die Identifizierungsmittel (20) gekoppelt sind und dazu in der Lage sind, die Wirkung der Pressglieder (52) auf eine durch die Identifizierungsmittel (20) erzeugte Produktinformation anzupassen.

## Revendications

1. Dispositif de mise en place contrôlée de produits (10) dans un récipient (100), comprenant un chemin de transport (11, 12) pour une alimentation en produits (10), un poste de chargement (60 à 70), proche d'une extrémité du chemin de transport (11, 12) pour recevoir le récipient (100), le poste de chargement (60 à 70) étant muni de moyens de chargement (65) pour la mise en place contrôlée, dans le récipient (100), de produits (10) fournis par le chemin de transport (11, 12), les moyens de chargement (65) étant adaptés pour placer un produit (10) amené dans le récipient (100), via au moins un déplacement linéaire, et en ce que, en amont des moyens de chargement (65), est prévu au moins un manipulateur (40, 50, 61), en mesure de placer un produit (10) sous une orientation de base contrôlée, ladite orientation de base permettant aux moyens de chargement (65) de placer le produit (10) en une position souhaitée dans le récipient (100) via ledit déplacement linéaire, **caractérisé en ce que** lesdits moyens d'identification (20) sont prévus pour identifier un produit (10) fourni dans le chemin de transport (11, 12), et **en ce que** le au moins un manipulateur (40, 50, 61) et les moyens de chargement (65) peuvent être commandés, sur la base de paramètres dérivés d'une identité de produit déterminée.

2. Dispositif tel que revendiqué à la revendication 1, **caractérisé en ce que** les moyens d'identification (20) comprennent un capteur électronique (21), en mesure d'enregistrer un code d'identification disposé sur un produit.

3. Dispositif tel que revendiqué à la revendication 2, **caractérisé en ce que** le code d'identification comprend un code à barres.

4. Dispositif tel que revendiqué à l'une quelconque des revendications précédentes, **caractérisé en ce que** le poste de chargement (60 à 70) comprend un siège de chargement (70), ajustable au moins en direction verticale, pour recevoir sur lui le récipient (100).

5. Dispositif tel que revendiqué à la revendication 4, **caractérisé en ce que** le siège de chargement (70) est susceptible d'être incliné au moins quelque peu autour d'un axe sensiblement horizontal, ledit axe s'étendant sensiblement transversalement par rapport à une direction dudit déplacement linéaire.

6. Dispositif tel que revendiqué à l'une ou plusieurs des revendications précédentes, **caractérisé en ce que** le au moins un manipulateur (40) est adapté pour au moins incliner un produit et le faire tourner sur un axe vertical, de la façon souhaitée.

7. Dispositif tel que revendiqué à la revendication 6, **caractérisé en ce que** le manipulateur (10) comprend une surface de butée (41), pouvant être placée dans le chemin de transport (11, 12), transversalement par rapport à une direction de transport, afin de recevoir contre elle un produit (10).

8. Dispositif tel que revendiqué à l'une ou plusieurs des revendications précédentes, **caractérisé en ce que** les moyens de chargement comprennent une plate-forme (65), déplaçable au moins sensiblement horizontalement en au moins une première direction, pour recevoir sur elle le produit (10), ladite plate-forme (65), en une première position, étant au moins sensiblement en ligne avec le chemin de transport (11, 12), de manière à recevoir sur elle un produit (10) fourni, et, à une deuxième position, pénétrant dans le récipient (100), pour décharger un produit (10) s'y trouvant.

9. Dispositif tel que revendiqué à la revendication 8, **caractérisé en ce que** la plate-forme et le récipient sont déplaçables par rapport à chaque autre, en une deuxième direction, au moins sensiblement transversalement par rapport à la première direction.

10. Dispositif tel que revendiqué à l'une ou plusieurs des revendications précédentes, **caractérisé en ce qu'**au moins un autre manipulateur (40, 50, 61) est agencé, en mesure de coopérer avec un produit (10) pour le transporter en une autre orientation.

11. Dispositif tel que revendiqué à la revendication 10, **caractérisé en ce que** le au moins un autre manipulateur (50) comprend des moyens d'alignement (51, 52, 53), adaptés pour aligner un produit (10) au moins pratiquement rigidement dans le chemin de transport (11, 12).

12. Dispositif tel que revendiqué à la revendication 11, **caractérisé en ce que** les moyens d'alignement (51, 52, 53) comprennent deux organes de pression (52) placés de chaque côté du chemin de transport (11, 12), en mesure d'agir sur le produit (10) sensiblement transversalement par rapport à la direction de transport, et **en ce que** les moyens d'alignement (51, 52, 53) sont couplés aux moyens d'identification (20), et sont en mesure d'adapter l'action des organes de pression (52) à l'information de produit générée par les moyens d'identification (20).
